# EUROPÄISCHE PATENTSCHRIFT

(11) **EP 0 434 802 B1**
(45) Veröffentlichungstag und Bekanntmachung des Hinweises auf die Patenterteilung: **23.03.1994**
(21) Anmeldenummer: 90910093.5
(22) Anmeldetag: 16.07.1990
(51) Int. Cl.: E06B 3/66, C03C 17/00

(54) **Gasdichte Randdichtung und Verfahren zu deren Herstellung**
Gasproof edge seal and method for producing it
Etanchéité aux gaz pour bordure et procédé de fabrication

(30) Priorität: 16.07.1989 CH 2650/89; 24.08.1989 CH 3076/89
(43) Veröffentlichungstag der Anmeldung: 03.07.1991
(73) Patentinhaber: BÄCHLI, Emil, CH-5304 Endingen (CH)
(72) Erfinder: BÄCHLI, Emil, CH-5304 Endingen (CH)
(74) Vertreter: Fenner, Werner, Dipl.-Ing.
(86) Internationale Anmeldenummer: CH9000172
(87) Internationale Veröffentlichungsnummer: WO9101429

(56) Entgegenhaltungen:
- WO-A-87/03327
- DE-B- 1 087 327
- DE-B- 2 035 783

## Beschreibung

Die Erfindung bezieht sich auf ein Verfahren zur Herstellung einer gasdichten Randdichtung für eine zwischen wenigstens zwei beabstandeten Wandelementen aus Glas oder Glaslegierung eines Bau- und/oder Lichtelementes begrenzten Zwischenraum, bei dem auf dem Umfangsrand wenigstens einer Seitenfläche jedes Wandelementes eine Metallschicht aufgebracht, darüber eine Schicht aus lötbarem Material angeordnet und daran eine den Rand der Wandelemente einfassende lötbare Folie festgelötet wird.

Eine nach der eingangs beschriebenen Art an einem Bau- und/oder Lichtelement ausgebildete gasdichte Randabdichtung vermittelt die WO-87/03327, wobei neben einer Reihe ganz andersartiger Randabdichtungen die Aufbringung einer Schmelzmetallschicht auf das Glas durch Metallspritzen nach dem Plasmaverfahren angegeben ist.

Bei einem anderen Verfahren nach der DE-B-2035783 wird zum Anlöten eines Bleiprofils an den verzinnten Rand einer Glasplatte unter kontrolliertem Druck und kontrollierter Temperatur, vornehmlich zur Herstellung einer Isolierverglasung aus zwei Glasscheiben, ein Zwischenprofilteil von U-förmigem Querschnitt auf Abstand gehalten. Dabei werden die Schenkel des Profilteils unter kontrolliertem Anpressdruck an die Glasplatte angelegt und die einander berührenden Flächen auf einer zum Schmelzen des Zinns ausreichenden, jedoch unterhalb der die Kristalleigenschaften des Bleis verändernden Temperatur gehalten, worauf man die Lötung bis zur Erstarrung des Zinns unter fortdauerndem Anpressdruck abkühlen lässt.
Diese bekannten Verfahren sind völlig unzureichend für die an ein Bau- und/oder Lichtelement der eingangs genannten Art gestellten hohen Anforderungen bezüglich Isolation und Dichtheit.

Gasdichte Randabdichtungen bilden seit Jahren ein ungelöstes Problem und somit ein Hindernis in der Entwicklung stark zu verbessernder Wärmeisolationen, insbesondere in der Fensterindustrie.

Demzufolge stellt sich an die vorliegende Erfindung die Aufgabe, ein Verfahren nach der eingangs genannten Art zu schaffen, mit dem Wärmeverluste in geschlossenen Räumen weitgehend behoben werden können bzw. das Erwärmen von geschlossenen Räumen vornehmlich durch Tageslicht erfolgen kann.

Erfindungsgemäss wird diese Aufgabe dadurch gelöst, dass die als Haftschicht dienende Metallschicht auf dem Umfangsrand durch physikalische (PVD) oder chemische (CVD) Abscheidung aus der Gas- bzw. Dampfphase ausgebildet und darauf eine als Sperrschicht dienende weitere Schicht aus lötbarem Material aufgetragen wird.

Unter die genannten Beschichtungsmetohden PVD - abgekürzt für "physical vapor deposition" - und CDV abgekürzt für " chemical vapor deposition ", fallen das Bedampfen, Sputtern, Ionenplattieren, die reaktiven Varianten dieser Methoden, thermische, plasma- und photonen aktivierte sowie das laserinduzierte CVD.

Bei den PVD-Prozessen erfolgt die Abscheidung aus der Gasphase durch Bedampfen, Sputtern oder Ionenplattieren. Beim Bedampfen unter Vakuum, verdampft das Schichtmaterial in einer heizbaren Quelle und die sich geradlinig ausbreitenden Dampfatome lassen sich auf dem Substrat als Schicht auftragen.
Sputtern oder Kathodenzerstäubung ist ein Vakuumprozess in welchem Ionen auf das Schichtmaterial (Targetmaterial) treffen und dieses durch Impulsübertragung zerstäuben. Beim Ionenplattieren unter Vakuum wird ein Teil der zum Substrat gelangenden Atome ionisiert und durch ein elektrisches Feld beschleunigt. Durch die Beschleunigungsenergie, mit welcher die Teile auf dem Substrat auftreffen, werden die Eigenschaften der aufgetragenen Schicht begünstigt. Auf diese Art wurden schon dünne Schichten für optische, optoelektronische, magnetische und mikroelektronische Bauelemente hergestellt.

CVD-Prozesse werden unter chemischer Abscheidung aus der Dampfphase durchgeführt. Beim thermischen CVD-Prozess finden chemische Reaktionen in der Dampfphase statt, worauf sich das Reaktionsmaterial als Schicht auf dem Substrat niederschlägt.
Weiter existieren das plasma-aktivierte CVD, das photonenaktivierte CVD sowie das laser-induzierte CVD.
Die CVD-Verfahren wurden bisher hauptsächlich im Maschinen- und Apparatebau sowie der elektronischen Industrie angewendet und dienen der Herstellung von Verschleissschutzschichten oder Korrosionsschutzschichten.

Durch diese Verfahren können die Material- und Zustandseigenschaften des Substrates auf eine bestimmte Eindringtiefe geändert werden. Die Eigenschaften der Randschicht hängen dann vom Substratmaterial, dem gewählten Verfahren und den Prozessparametern ab.

Ein dauerhaft evakuiertes Bau- und/oder Lichtelement wird dem Wohnungs- und Industriebau neue Möglichkeiten eröffnen, insbesondere im Bereich der Wärmeenergie können erhebliche Einsparungen erzielt werden, wenn bspw. durch evakuierte, transparente Wände die Beheizung der Häuser durch das einfallende Licht vorgenommen und somit die Reduktion grösserer Mengen umweltschädlicher fossiler Brennstoffe verwirklicht wird.

Durch die Anwendung des erfindungsgemässen Verfahrens treffen losgelöste Atome des Beschichtungsmaterials auf die feste Oberfläche der Wandelemente (Substrat) und werden als Adatome lose gebunden. Als Adatome diffundieren sie über die Oberfläche bis sie als stabiler Keim bzw. durch Anlagerung an vorhandene Keime kondensieren. Die Beweglichkeit der Adatome an der Oberfläche hängt von ihrer kinetischen Energie, der Substrattemperatur und der Stärke der Wechselwirkung zwischen Adatom und Substrat ab. Besteht eine starke Wechselwirkung, dann erhält man eine hohe Keimdichte, und umgekehrt. Durch Anlagerung von Adatomen wachsen die Keime zu sog. Inseln, und letztere koalisieren zu einem zusammenhängenden Film. Die Keimdichte und das Keimwachstum bestimmen die Kontaktflächen in der Uebergangszone. Bei grosser Keimdichte ist die Haftfestigkeit aufgrund grosser Kontaktflächen entsprechend hoch. Das Schichtmaterial wird in Poren der Substratoberfläche bzw. der Oberfläche der Wandelemente verankert.

Die unter diesen Verfahren mit dem Substrat verbundene Schicht, erreicht eine Reissfestigkeit die grösser ist als sie der Werkstoff Glas der Wandelemente aufweist. Zudem ist die Uebergangszone, auch Interface-Zone genannt, ebenso gasdicht wie das aus Glas bestehende Wandelement selbst.

Die mit diesen Vorgehen abgestäubten Atome werden mit einer hohen Energie ausgestossen, die je nach Target-bzw. Beschichtungsmaterial 10 bis 40 Elektronenvolt (eV) beträgt, während verdampfte Atome beim Aufdampfverfahren Energien von nur 0,2 bis 0,3 eV aufweisen. Die höhere Energie beim Sputtern ist ein Grund für eine bessere Haftfestigkeit der aufgebrachten Schicht gegenüber dem Aufdampfverfahren.

Die Haftfestigkeit einer aufgesputterten Schicht auf Glas hängt von den Haftstellen ab, an denen im ersten Augenblick der Schichtbildung Zentren einer nuklearen Bindung entstehen. Diese Zentren werden durch Fehlstellen in der Oberfläche gebildet; von Fehlstellen im Kristallgitter, lokalen Potentialänderungen als Folge von freien Bindungen oder elektrischen Aufladungen.

Die Kathodenzerstäubung oder das Sputtern begünstigen die Bildung solcher Haftstellen.

Von den erwähnten Verfahren dürfte sich das Magnetron-Sputtersystem aus der Gruppe PVD (physical vapor deposition) als das zur Zeit bestgeeignetste Verfahren für die Realisierung eines bislang unerreichten gasdichten Isolierglas - Randverbundes erweisen. Dieses Sputtersystem gestattet relativ hohe Depositionsraten und grosse Depositionsflächen bei geringer Substratserwärmung.

Bevor man mit Sputtern beginnt, erzeugt man an der Glasoberfläche, etwa auf der zu erstellenden Breite der Haftschicht vorteilhaft eine Ionenerosion durch Umlegen des Targetpotentials auf die Glasoberfläche. Damit reinigt man die Glasoberfläche und schafft zusätzliche, haftvermittelnde Fehlstellen im Kristallgitter.
Dieser Effekt kann verstärkt werden, indem über der Glasoberfläche eine mit Hochfrequenz gespiesene Elektrode angeordnet wird, sodass das Glas unter Elektronenbeschuss kommt.

Die ersten Atomlagen der reaktiven metallischen Haftschicht oxidieren und legieren mit dem Glas.

Damit die metallische Haftschicht beim Herstellen der dichten Verbindung zwischen den Wandelementen nicht beschädigt wird, ist vorteilhaft eine schützende Sperrschicht vorzusehen, die sich als löt- oder schweissbarer Werkstoff eignet. Diese Sperrschicht besteht aus Nickel, Kupfer oder dgl. gut lötbarem Metall oder Metallegierungen, die einen ähnlichen Ausdehnungskoeffizienten wie Glas aufweisen.
Durch die Sperrschicht wird beim Schmelzvorgang des auf die Sperrschicht aufgetragenen Weichlotes verhindert, dass sich letzeres mit der Haftschicht legiert und diese nicht zerstört. Das Weichlot besitzt vorteilhaft einen Ausdehnungskoeffizienten wie Glas.
Die Schmelztemperatur des Weichlotes sollte nicht höher sein als die Temperaturverträglichkeit einer Wärmeschutzschicht des Fensterglases.

Alternativ kann mit Ausnahme der Haftschicht der metallische Schichtaufbau mittels galvanischer oder chemischer Abscheidung oder durch thermisches Spritzen vorgenommen werden, wobei es bei der galvanischen Vorgehensweise vorteilhaft ist, wenn zwecks besserer elektrischer Leitfähigkeit die Haftschicht vorerst mit einem Kupferauftrag versehen wird.

Besonders einfach erweist sich ein Bau- und/oder Lichtelement, wenn zwei beabstandete Wandelemente an ihrem jeweils beschichteten Rand von einer mit einem Weichlot verlöteten, bandähnlichen Folie gasdicht eingefasst sind.

Eine solche Einfassung eignet sich zur Ausbildung eines Hohlraumes zwischen dem stirnseitigen Rand der Wandelemente und der letztere gasdicht umgebenden Folie.

Dieser Hohlraum kann mit Gettermitteln ausgestattet sein, die die Aufrechterhaltung des Vakuums zwischen den Wandelementen begünstigen.

Zum Schutz der Wandelemente gegen übermässige Erwärmung bei der Aktivierung des Gettermittels auf ca. 350 °C ist es vorteilhaft, wenn der stirnseitige Rand der Wandelemente mit einer luftdurchlässigen Isolationsschicht belegt wird.

Damit Luft gegen das Gettermittel strömen kann, ist vorzugsweise zwischen die Isolation und das Gettermittel eine durchlässige Schicht, bzw. ein Drahtgeflecht vorzusehen.

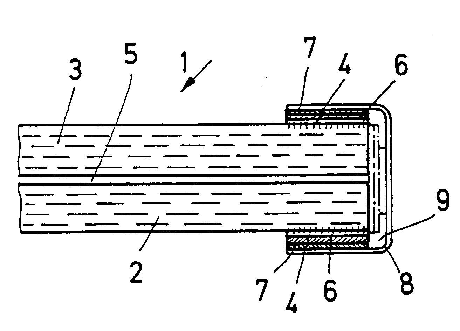

Das zur Durchführung des erfindungsgemässen Verfahrens vorgesehene Bau und/oder Lichtelement ist in der einzigen Figur in einer beispielhaften Ausführungsform dargestellt und anschliessend erläutert.

Mit 1 ist ein Bau- und/oder Lichtelement eines Gebäudes ausschnittweise veranschaulicht. Der eine Rand dieses aus zwei Wandelementen 2, 3 gebildeten Bau- und/oder Lichtelementes 1 offenbart eine durch physikalische (PVD) oder chemische (CVD) Abscheidung aus der Gas- bzw. Dampfphase vorgenommene Haftschicht 4 eines metallischen Werkstoffes, die für eine gasdichte Verbindung zwischen dem aus Glas bestehenden und durch einen Abstand einen evakuierbaren Zwischenraum 5 bildenden Wandelementen 2, 3 vorgesehen ist. Diese Haftschicht 4 könnte zur Bildung einer Dichtung auch an den zwischen den Wandelementen 2, 3 sich zugekehrten Rändern aufgetragen werden.
In der vorliegenden Darstellung ist auf die Haftschicht 4 eine die Haftschicht schützende Sperrschicht 6 aufgetragen, die sich als lötbar auszeichnet und galvanisch, chemisch oder durch thermisches Spritzen hergestellt wird.
Eine weitere Schicht 7 aus lötbarem Material ist mit der Sperrschicht 6 verschmolzen und dient der dichten Verbindung der den Rand des aus zwei Wandelementen 2, 3 gebildeten Bau- und/oder Lichtementes 1 einfassenden lötbaren Folie 8.

Letztere kann wie gezeigt so angeordnet sein, dass sie 8 zwischen dem stirnseitigen Rand des Bau- und/oder Lichtelementes 1 mit diesem einen Hohlraum 9 bildet, der zur Einlage von Gettermitteln 10 vorgesehen werden kann.

Zur Vermeidung von Schäden bei der Aktivierung des Gettermittels (10) und zu dessen Wirksamkeit, liegt an dem stirnseitigen Rand der Wandelemente 2, 3 eine luftdurchlässige Isolation 11 als Wärmeschutz an und vor ihr eine durchlässige Schicht 12 in Form eines Geflechtes aus Draht, Fiber oder ähnlichen, zu diesem Zweck geeigneten Materialien.

## Patentansprüche

1. Verfahren zur Herstellung einer gasdichten Randdichtung für eine zwischen wenigstens zwei beabstandeten Wandelementen (2, 3) aus Glas oder Glaslegierung eines Bau- und/oder Lichtelementes begrenzten Zwischenraum (5), bei dem auf dem Umfangsrand wenigstens einer Seitenfläche jedes Wandelementes (2, 3) eine Metallschicht aufgebracht, darüber eine Schicht (7) aus lötbarem Material angeordnet und daran eine den Rand der Wandelemente (2, 3) einfassende lötbare Folie (8) festgelötet wird, dadurch gekennzeichnet, dass die als Haftschicht (4) dienende Metallschicht auf dem Umfangsrand durch phsysikalische (PVD) oder chemische (CVD) Abscheidung aus der Gas- bzw. Dampfphase ausgebildet und darauf eine als Sperrschicht (6) dienende weitere Schicht aus lötbarem Material aufgetragen wird.

2. Verfahren nach Anspruch 1, dadurch gekennzeichnet, dass die Sperrschicht (6) mittels galvanischer oder chemischer Abscheidung oder durch thermisches Spritzen aufgetragen wird.

3. Verfahren nach Anspruch 2, dadurch gekennzeichnet, dass die Haftschicht (4) vor dem galvanischen Auftrag der Sperrschicht (6) mit einer Kupferschicht versehen wird.

4. Verfahren nach einem der Ansprüche 1 bis 3, dadurch gekennzeichnet, dass die Haftschicht (4) durch Magnetron-Sputtern erstellt wird.

5. Verfahren nach einem der Ansprüche 1 bis 4, dadurch gekennzeichnet, dass vor dem Erstellen der Haftschicht (4) die betreffende Oberfläche der Bauelemente (2, 3) einer mit Hochfrequenz gespiesenen Elektrode ausgesetzt wird.

6. Gasdichte Randdichtung für einen zwischen wenigstens zwei beabstandeten Wandelementen (2, 3) aus Glas oder einer Glaslegierung eines Bau- und/oder Lichtelementes begrenzten Zwischenraum (5), mit einer auf dem Umfangsrand wenigstens einer Seitenfläche jedes Wandelementes (2, 3) vorgesehenen Metallschicht, einer darüber angeordneten Schicht (7) aus lötbarem Material und einer daran festgelöteten, den Rand der Wandelemente (2, 3) einfassenden lötbaren Folie (8), dadurch gekennzeichnet, dass die als Haftschicht (4) dienende Metallschicht durch physikalische (PVD) oder chemische (CVD) Abscheidung aus der Gas- bzw. Dampfphase gebildet und zwischen dieser Haftschicht (4) und der Schicht (7) aus lötbarem Metall eine als Sperrschicht (6) dienende weitere Schicht aus lötbarem Material angeordnet ist.

7. Gasdichte Randdichtung nach Anspruch 6, dadurch gekennzeichnet, dass das lötbare Material der Sperrschicht (6) durch ein Weichlot (7) gebildet ist, das eine geringere Schmelztemperatur als die Temperaturverträglichkeit einer Wärmeschutzschicht des Wandelementes (2, 3) aufweist.

8. Gasdichte Randdichtung nach Anspruch 6 oder 7, dadurch genkennzeichnet, dass zwischen dem stirnseitigen Rand der Wandelemente (2, 3) und der Folie (8) ein Hohlraum (9) vorgesehen ist.

9. Gasdichte Randdichtung nach Anspruch 8, dadurch gekennzeichnet, dass der Hohlraum (9) mit Gettermitteln (10) versehen ist.

10. Gasdichte Randdichtung nach einem der Ansprüche 7 bis 9, dadurch gekennzeichnet, dass der stirnseitige Rand der Wandelemente (2, 3) mit einer luftdurchlässigen Isolation (11) versehen ist.

11. Gasdichte Randdichtung nach Anspruch 9 und 10, dadurch gekennzeichnet, dass zwischen Isolation (11) und Gettermittel (10) eine durchlässige Schicht (12) vorgesehen ist.

12. Gasdichte Randdichtung nach einem der Ansprüche 6 bis 11, dadurch gekennzeichnet, dass der Werkstoff der Sperrschicht (6) einen zumindest annähernd ähnlichen Ausdehnungskoeffizienten wie das Glas oder die Glaslegierung aufweist.

## Claims

1. Process for producing a gastight edge seal for an intermediate space (5) defined between at least two spaced wall elements (2, 3) of glass or a glass alloy of a construction and/or light element, in which a metal layer is applied to the circumferential edge of at least one side face of each wall element (2, 3), on top of which a layer (7) of solderable material is arranged and to which a solderable film (8) surrounding the edge of the wall elements (2, 3) is soldered, characterised in that the metal layer serving as an adhesive layer (4) is formed on the circumferential edge by physical (PVD) or chemical (CVD) deposition from the gas or vapour phase and a further layer of solderable material serving as a barrier layer (6) is applied thereto.

2. Process according to claim 1, characterised in that the barrier layer (6) is applied by means of electrodeposition or chemical deposition or by thermal spraying.

3. Process according to claim 2, characterised in that the adhesive layer (4) is provided with a copper layer prior to the electrodeposition of the barrier layer (6).

4. Process according to one of claims 1 to 3, characterised in that the adhesive layer (4) is prepared by magnetron sputtering.

5. Process according to one of claims 1 to 4, characterised in that the relevant surface of the construction elements (2, 3) is subjected to a high-frequency electrode prior to the preparation of the adhesive layer (4).

6. Gastight edge seal for an intermediate space (5) defined between at least two spaced wall elements (2, 3) of glass or a glass alloy of a construction and/or light element, comprising a metal layer provided on the circumferential edge of at least one side face of each wall element (2, 3), a layer (7) of solderable material arranged thereon and a solderable foil (8) surrounding the edge of the wall elements (2, 3) soldered thereto, characterised in that the metal layer serving as an adhesive layer (4) is formed by physical (PVD) or chemical (CVD) deposition from the gas or vapour phase and a further layer of solderable material serving as a barrier layer (6) is arranged between this adhesive layer (4) and the layer (7) of solderable material.

7. Gastight edge seal according to claim 6, characterised in that the solderable material of the barrier layer (6) is formed by a soft solder (7) which has a lower melting temperature than the thermal compatibility of a heat-insulating layer of the wall element (2, 3).

8. Gastight edge seal according to claim 6 or claim 7, characterised in that a cavity (9) is provided between the end edge of the wall elements (2, 3) and the film (8).

9. Gastight edge seal according to claim 8, characterised in that the cavity (9) is provided with gettering means (10).

10. Gastight edge seal according to one of claims 7 to 9, characterised in that the end edge of the wall elements (2, 3) is provided with air-permeable insulation (11).

11. Gastight edge seal according to claims 9 and 10, characterised in that a permeable layer (12) is provided between the insulation (11) and the gettering means (10).

12. Gastight edge seal according to one of claims 6 to 11, characterised in that the material of the barrier layer (6) has a coefficient of expansion at least approximately similar to that of the glass or glass alloy.

## Revendications

1. Procédé pour fabriquer un joint de bordure étanche aux gaz pour un intervalle (5) délimité entre au moins deux éléments de paroi (2,3) en verre ou en un alliage de verre d'un élément de construction ou d'éclairage, au cours duquel une couche de métal est appliquée sur le bord d'au moins une surface latérale de chaque élément de paroi (2, 3), puis une couche (7) de matière brasable est posée sur la précédente et une feuille brasable (8) entourant le bord des éléments de paroi (2, 3) y est fixée par brasage, caractérisé en ce que la couche de métal sur le bord servant de couche d'adhérence (4) est réalisée par dépôt en phase gazeuse ou vapeur par procédé physique (PVD) ou procédé chimique (CVD), et en ce qu'une autre couche de matière brasable y est appliquée en tant que couche d'arrêt (6).

2. Procédé selon la revendication 1, caractérisé en ce que la couche d'arrêt (6) est appliquée par dépôt électrolytique ou chimique, ou par métallisation à chaud.

3. Procédé selon la revendication 2, caractérisé en ce que la couche d'adhérence (4) est munie d'une couche de cuivre avant l'application par électrolyse de la couche d'arrêt (6).

4. Procédé selon l'une des revendications 1 à 3, caractérisé en ce que la couche d'adhérence (4) est réalisée par pulvérisation de magnétron.

5. Procédé selon l'une des revendications 1 à 4, caractérisé en ce qu'avant de réaliser la couche d'adhérence (4), la surface concernée des éléments de construction (2, 3) est exposée à une électrode alimentée à haute fréquence.

6. Joint de bordure étanche aux gaz pour un intervalle (5) délimité entre au moins deux éléments de paroi (2, 3) en verre ou en alliage de verre d'un élément de construction ou d'éclairage, au cours duquel une couche de métal est appliquée sur le bord d'au moins une surface latérale de chaque élément de paroi (2, 3), puis une couche (7) de matière brasable est posée sur la précédente et une feuille brasable (8) entourant le bord des éléments de paroi (2, 3) y est fixée par brasage, caractérisé en ce que la couche de métal servant de couche d'adhérence (4) est réalisée par dépôt en phase gazeuse ou vapeur par procédé physique (PVD) ou procédé chimique (CVD), et en ce qu'entre cette couche d'adhérence (4) et la couche (7) de métal brasable est disposée une autre couche de matière brasable servant de couche d'arrêt (6).

7. Joint de bordure étanche aux gaz selon la revendication 6, caractérisé en ce que la matière brasable de la couche d'arrêt (6) est formée par une brasure tendre (7) dont la température de fusion est inférieure à la température maximale supportable par une couche calorifuge de l'élément de paroi (2, 3).

8. Joint de bordure étanche aux gaz selon la revendication 6 ou 7, caractérisé en ce qu'est prévu un espace creux (9) entre le bord frontal des éléments de paroi (2, 3) et la feuille (8).

9. Joint de bordure étanche aux gaz selon la revendication 8, caractérisé en ce que l'espace creux (9) est muni de moyens d'absorption de gaz (10).

10. Joint de bordure étanche aux gaz selon l'une des revendications 7 à 9, caractérisé en ce que le bord frontal des éléments de paroi (2, 3) est muni d'une isolation perméable à l'air (11).

11. Joint de bordure selon les revendications 9 et 10, caractérisé en ce qu'entre l'isolation (11) et les moyens d'absorption de gaz (10) est prévue une couche perméable (12).

12. Joint de bordure étanche aux gaz selon l'une des revendications 6 à 11, caractérisé en ce que la matière qui constitue la couche d'arrêt (6) présente un coefficient de dilatation au moins approximativement semblable à celui du verre ou de l'alliage de verre.
